(19) Europäisches Patentamt
European Patent Office
Office européen des brevets

(11) EP 1 788 007 A1

(12) # EUROPEAN PATENT APPLICATION
published in accordance with Art. 158(3) EPC

(43) Date of publication:
**23.05.2007 Bulletin 2007/21**

(21) Application number: **05781486.5**

(22) Date of filing: **30.08.2005**

(51) Int Cl.:
***C08F 220/14*** (2006.01) ***C08F 220/16*** (2006.01)
***C08F 224/00*** (2006.01) ***G02B 1/04*** (2006.01)
***G02B 5/18*** (2006.01)

(86) International application number:
**PCT/JP2005/015722**

(87) International publication number:
**WO 2006/025360 (09.03.2006 Gazette 2006/10)**

(84) Designated Contracting States:
**DE**

(30) Priority: **30.08.2004 JP 2004250514**

(71) Applicant: **MITSUBISHI RAYON ENGINEERING CO., LTD.**
**Minatoku,**
**Tokyo 108-8506 (JP)**

(72) Inventors:
- **OKIMOTO, Yukinori c/o Toyama Plants, Toyama-shi, Toyama 931-8601 (JP)**
- **HATAKEYAMA, Hiroki, c/o Otake Plants, Otake-shi, Hiroshima 7390693 (JP)**

(74) Representative: **ter Meer, Nicolaus**
**Ter Meer Steinmeister & Partner GbR,**
**Mauerkircherstrasse 45**
**81679 München (DE)**

(54) **OPTICAL COPOLYMER AND MOLDED PRODUCT COMPRISING THE SAME**

(57) This invention provides an optical copolymer which is excellent in balance among high transmittance, high heat resistance, low birefringent property, and mechanical strength, and an optical molded article comprising the optical copolymer. The optical copolymer comprises 50 to 80% by mass of methyl methacrylate units, 10 to 20% by mass of units derived from a specific lactone compound, and 10 to 30% by mass of trifluoroethyl methacrylate units. The mass ratio of the trifluoroethyl methacrylate units is in the range of 0.5 to 2.0 when the mass of the units derived from the specific lactone compound is presumed to be 1, and the glass transition temperature is 120°C or above. The optical copolymer is suitable for objective lenses, prisms, condenser lenses, diffraction gratings, collimator lenses and sensor lenses.

EP 1 788 007 A1

## Description

### TECHNICAL FIELD

The present invention relates to an optical copolymer comprising a specified compound unit and an optical molded article using the same.

### BACKGROUND ART

Today, devices such as personal computers, audio-visual appliances and TV games, which are applicable to the forms of transmitting and receiving information of moving or still images, sounds and letters in high speed by using different plural service forms such as data communication and broadcasting, namely, compatible to multimedia, have started to spread. The multimedia-compatible devices are provided with optical recording media such as CD-ROM, CD-R, MD and DVD to store and reproduce information. Efforts to increase the recording capacity of these optical recording media by increasing their recording densities have been advanced because the amount of information through multimedia is increasing year after year. As the recording density of the optical information recording media is increased, it becomes necessary to use a laser beam of a short wavelength, more concretely to use a blue laser of the wavelength of 350 to 450 nm for the device to read information from the optical information recording media or write information into the optical information recording media.

As resins to be used for optical purposes such as optical parts of the device for reading information from the optical recording media or writing information into the optical recording media, polystyrene, polycarbonate, polymethyl methacrylate, a methyl methacrylate based copolymer, a copolymer of styrene and methyl methacrylate, a thermoplastic norbornene resin and a cyclic polyolefin resin are used.

As the methyl methacrylate based copolymer, for example, a copolymer of a lactone compound having a specific structure and methyl methacrylate is disclosed (refer to Patent Document 1). However, it is difficult to use this resin for optical members of the device for reading information from the optical recording media or writing information into the optical recording media because it lacks in low birefringent property and low moisture-absorption characteristics.

Further, as the methyl methacrylate based copolymer, an optical resin composition composed of a resin polymerized from a monomer mixture having, as necessary components, methyl methacrylate, methacrylic ester or acrylic ester having alicyclic hydrocarbon group with 5 to 22 carbon atoms in its ester portion and methacrylic ester or acrylic ester having fluorine atoms in its ester portion is disclosed (refer to Patent Document 2). However, it is difficult to use this resin for optical members of the device for reading information from the optical recording media or writing information into the optical recording media because it is difficult to keep its balance among heat resistance, low birefringent property and mechanical strength.

Patent Document 1: Japanese Patent Application Laid-Open No. Hei8-231,648
Patent Document 2: Japanese Patent Application Laid-Open No. 2004-204,018

### DISCLOSURE OF INVENTION

### PROBLEM TO BE SOLVED BY THE INVENTION

It is an object of the present invention to provide an optical copolymer which has excellent balance among high transmittance, high heat resistance, low birefringent property and mechanical strength, and it is a further object of the present invention to provide an optical molded article using the optical copolymer.

### MEANS FOR SOLVING THE PROBLEM

The present invention resides in an optical copolymer comprising 50 to 80% by mass of methyl methacrylate units, 10 to 20% by mass of units derived from a lactone compound represented by the following general formula (1), and 10 to 30% by mass of trifluoroethyl methacrylate units, wherein the mass ratio of the trifluoroethyl methacrylate units is in the range of 0.5 to 2.0 when the mass of the units derived from the lactone compound represented by the general formula (1) is presumed to be 1, and the glass transition temperature of the optical copolymer is 120°C or above.

General formula (1)

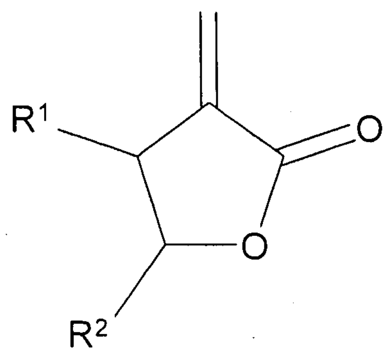

(In the above formula, $R^1$ and $R^2$ independently represent hydrogen atom, methyl group or ethyl group, and the total number of the carbon atoms in each of $R^1$ and $R^2$ is any one of 1 to 3.)
Further, the present invention also resides in an optical molded article using the aforementioned optical copolymer.

EFFECT OF THE INVENTION

The copolymer of the present invention has excellent balance among high transmittance, high heat resistance, low birefringent property and mechanical strength, and is suitable for optical use. Further, the molded article comprising the optical copolymer can be used without increasing an error rate over a long period of time when a laser beam of a short wavelength such as a blue laser is subjected to transmit it in high intensity to write information into information recording media or read information from information recording media.

BEST MODE FOR CARRYING OUT THE INVENTION

The optical copolymer of the present invention, which comprises 50 to 80% by mass of methyl methacrylate units, 10 to 20% by mass of units derived from a lactone compound represented by the following general formula (1), and 10 to 30% by mass of trifluoroethyl methacrylate units, wherein the mass ratio of the trifluoroethyl methacrylate units is in the range of 0.5 to 2.0 when the mass of the units derived from the lactone compound represented by the general formula (1) is presumed to be 1, and the glass transition temperature of the optical copolymer is 120°C or above, is called "the optical copolymer of the present invention" for convenience. Further, the optical copolymer of the present invention, which comprises 50 to 75% by mass of methyl methacrylate units, 10 to 20% by mass of units derived from a lactone compound represented by the following general formula (1), 10 to 30% by mass of trifluoroethyl methacrylate units, and 5 to 25% by mass of (meth)acrylic ester units having alicyclic hydrocarbon group with 6 to 22 carbon atoms in its ester portion, wherein the mass ratio of the trifluoroethyl methacrylate units is in the range of 0.5 to 2.0 when the mass of the units derived from the lactone compound represented by the general formula (1) is presumed to be 1, and the glass transition temperature of the optical copolymer is 120°C or above, is also called "the optical copolymer of the present invention" for convenience.

General formula (1)

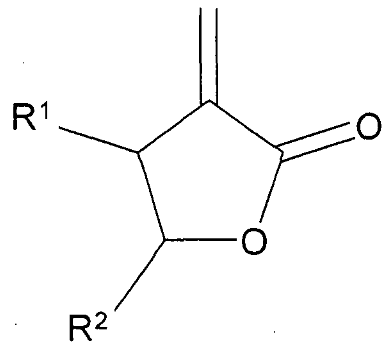

(In the above formula, $R^1$ and $R^2$ independently represent hydrogen atom, methyl group or ethyl group, and the total number of the carbon atoms in each of $R^1$ and $R^2$ is any one of 1 to 3.)
Further, the molded article using the optical copolymer of the present invention is called "the optical molded article of the present invention" for convenience.

The methyl methacrylate units constituting the optical copolymer of the present invention are necessary for the optical copolymer to have sufficient optical characteristics and mechanical strength. The amount of the methyl methacrylate units has to be 50% by mass or more based on the total units of the compounds constituting the copolymer, preferably 55% by mass or more, to obtain the copolymer which is excellent in mechanical strength. Further, it has to be 80% by mass or less, preferably 73% by mass or less, to obtain the copolymer which is excellent in heat resistance. Further, in the case that (meth)acrylic ester units having alicyclic hydrocarbon group with 6 to 22 carbon atoms in its ester portion mentioned later are contained in the optical copolymer of the present invention, the amount of the methyl methacrylate units is preferably 50% by mass or more and 75% by mass or less, more preferably 70% by mass or less.

The units derived from the lactone compound represented by the general formula (1) constituting the optical copolymer of the present invention is necessary for the optical copolymer to have sufficient heat resistance. The amount of the units has to be 10% by mass or more based on the total units of the compounds constituting the copolymer, preferably 12% by mass or more, to obtain the copolymer which is excellent in heat resistance. It has to be 20% by mass or less, more preferably 18% by mass or less to obtain the copolymer which is excellent in low moisture-absorption characteristics, low birefringent property and mechanical strength. Further, in the case that (meth)acrylic ester units having alicyclic hydrocarbon group with 6 to 22 carbon atoms in its ester portion mentioned later are contained in the optical copolymer of the present invention, the amount of the units derived from the lactone compound is preferably 10% by mass or more and 20% by mass or less, more preferably 18% by mass or less.

The trifluoroethyl methacrylate units constituting the optical copolymer of the present invention is necessary for the optical copolymer to have sufficient low birefringent property and low moisture-absorption characteristics. The amount of the trifluoroethyl methacrylate units has to be 10% by mass or more based on the total units of the compounds constituting the copolymer, preferably 15% by mass or more, to obtain the copolymer which is excellent in low birefringent property and low moisture-absorption characteristics.
Further, it has to be 30% by mass or less, more preferably 25% by mass or less, to obtain the copolymer which is excellent in heat resistance. Further, in the case that (meth)acrylic ester units having alicyclic hydrocarbon group with 6 to 22 carbon atoms in its ester portion mentioned later are contained in the optical copolymer of the present invention, the amount of the trifluoroethyl methacrylate units is preferably 10% by mass or more and 30% by mass or less, more preferably 20% by mass or less.

The mass ratio of the trifluoroethyl methacrylate units has to be in the range of 0.5 to 2.0 when the mass of the units derived from the lactone compound represented by the general formula (1) is presumed to be 1 to obtain the copolymer which is excellent in balance between sufficient heat resistance and low birefringent property as the optical copolymer. It has to be 0.5 or more, preferably 0.8 or more, to obtain the copolymer which is excellent in low birefringent property. Further, it has to be 2.0 or less, preferably 1.5 or less, to obtain the copolymer which is excellent in balance between heat resistance and mechanical strength.

Further, the optical copolymer of the present invention can contain (meth)acrylic ester units having alicyclic hydrocarbon group with 6 to 22 carbon atoms in its ester portion. The amount of the (meth)acrylic ester units is preferably 5% by mass or more based on the total units of the compounds constituting the copolymer, more preferably 10% by mass or more from the viewpoint of giving the copolymer low moisture-absorption characteristics. Further, it is preferably 25% by mass or less based on the total units of the compounds constituting the copolymer, more preferably 20% by

mass or less from the viewpoint of mechanical strength. The (meth)acrylic ester units having alicyclic hydrocarbon group with 6 to 22 carbon atoms in its ester portion are not particularly limited and may include cyclohexyl (meth)acrylate, methylcyclohexyl (meth)acrylate, trimethylcyclohexyl (meth)acrylate, norbornyl (meth)acrylate, norbornylmethyl (meth) acrylate, cyanonorbornyl (meth)acrylate, isonorbornyl (meth)acrylate, bornyl (meth)acrylate, menthyl (meth)acrylate, fenthyl (meth)acrylate, adamantly (meth)acrylate, dimethyladamantyl (meth)acrylate, tricyclo[5.2.1.0$^{2,6}$]decan-8-yl (meth)acrylate, tricyclo[5.2.1.0$^{2,6}$]decan-4-methyl (meth)acrylate, cyclodecyl (meth)acrylate and the like. These can be used alone or in combination of two or more kinds. Now, "(meth)acryl" in the present invention means a generic name of "methacryl" and "acryl".

Further, the copolymer of the present invention can contain units derived from copolymerizable monomers other than the foregoing units as long as the resultant copolymer does not lose the performance as an optical copolymer. Concretely, the units may include alkyl (meth)acrylates other than methyl methacrylate such as methyl acrylate, ethyl (meth)acrylate, n-butyl (meth)acrylate, isobutyl (meth)acrylate, t-butyl (meth)acrylate, and 2-ethylhexyl (meth)acrylate; aromatic (meth)acrylates such as phenyl (meth)acrylate and benzyl (meth)acrylate; substituted aromatic (meth)acrylates such as fluorophenyl (meth)acrylate, chlorophenyl (meth)acrylate, fluorobenzyl (meth)acrylate, and chlorobenzyl (meth) acrylate; halogenated alkyl (meth)acrylates such as fluoromethyl (meth)acrylate and fluoroethyl (meth)acrylate; hydroxyalkyl (meth)acrylate, glycidyl (meth)acrylate, ethylene glycol (meth)acrylate, and polyethylene glycol (meth)acrylate; styrene, $\alpha$-substituted styrenes such as $\alpha$-methyl styrene and $\alpha$-ethyl styrene; aromatic vinyls such as fluoro styrene and methyl styrene; vinyl cyanides such as acrylonitrile and methacrylonitrile; N-substituted maleimides such as N-methyl maleimide, N-ethyl maleimide, N-propyl maleimide, N-cyclohexyl maleimide, N-phenyl maleimide, and N-chlorophenyl maleimide; unsaturated dibasic acids or their derivatives such as maleic acid, maleic anhydride, and fumaric acid; (meth)acrylamide, N-dimethyl (meth)acrylamide, N-diethyl (meth)acrylamide; metal (meth)acrylates such as calcium (meth)acrylate, barium (meth)acrylate, lead (meth)acrylate, tin (meth)acrylate, and zinc (meth)acrylate; and unsaturated aliphatic acids such as (meth)acrylic acid and their derivatives. Among these monomer units other than the foregoing units, methyl acrylate is preferable from the viewpoint of giving the resultant copolymer heat resistance. These monomer units can be used alone or in combination of two or more kinds.

The glass transition temperature of the optical copolymer of the present invention has to be 120°C or more for the optical molded article to sufficiently have form stability under the service conditions. The glass transition temperature is the value measured with differential scanning calorimeter.

The saturated moisture-absorption rate of the optical copolymer of the present invention is not particularly limited. However, it is preferably 1.6% by mass or less and more preferably 1.2% by mass or less for the optical copolymer to sufficiently have form stability under the service conditions. The saturated moisture-absorption rate is the value measured at 60°C, under the relative humidity of 90% and the exposure time of 720 hours.

The weight average molecular weight of the optical copolymer of the present invention is not particularly limited. However, it is preferably 50,000 or more and more preferably 70,000 or more for the optical copolymer to sufficiently have mechanical strength. Further, it is preferably 150,000 or less, more preferably 100,000 or less for the optical copolymer to sufficiently have moldability and low birefringent property.

Setting of the weight average molecular weight of the optical copolymer can be carried out by publicly known methods such as adjusting an amount of a chain transfer agent at the time of producing the copolymer and the like.

The optical copolymer of the present invention can be produced by polymerizing a mixture of methyl methacrylate, a lactone compound represented by the general formula (1), trifluoroethyl methacrylate and, depending on circumstances, the other copolymerizable monomer through publicly known methods such as bulk polymerization, suspension polymerization, solution polymerization, emulsion polymerization and the like.

It is possible to add to the optical copolymer of the present invention publicly known additives, if necessary, like mold releasing agents, coloring agents such as dyes and pigments, various antioxidants, light stabilizers, and plasticizers.

The optical molded article can be obtained by molding the optical copolymer of the present invention. The method for molding of the optical molded article is not particularly limited and, for example, includes melt molding such as injection molding, press molding, extrusion molding and blow molding, by using the copolymer obtained. It further includes solution casting, by using the copolymer obtained. Further, when the foregoing mixture is subjected to bulk polymerization, the mixture can be directly molded into the shape of the optical molded article. In the present invention, injection molding or press molding is preferable and injection molding is more preferable because it is excellent in dimensional accuracy and the like and possible to mold aspheric shape and the like.

The flexural strength of the optical molded article of the present invention is not particularly limited. However, it is preferably 50 MPa or more and more preferably 60 MPa or more for the optical molded article to sufficiently have strength at the time of its production or its handling. The flexural strength is the value measured according to JIS K7171.

The light transmittance with the light having the wavelength of 405 nm of the optical molded article of the present invention, measured right after it is molded, is not particularly limited. However, it is preferably 88% or more and more preferably 90% or more from the viewpoint of reliability of the optical molded article.

Retardation is one of the measures of evaluation of birefringence. Retardation of the optical molded article of the present invention is not particularly limited. However, it is preferably 100 nm or less and more preferably 80 nm or less for the optical molded article to sufficiently have light-harvesting property of a lens under the service conditions. Retardation is the value of phase difference (measuring wavelength : 546 nm) of test pieces measured with a polarizing microscope.

The foregoing physical properties such as glass transition temperature, flexural strength and saturated moisture-absorption rate can be adjusted to fall in respective proper ranges by selecting a predetermined-amount ratio of each compound unit constituting the copolymer.

The optical molded article of the present invention is not particularly limited and may include, for example, optical parts of a device for reading information from an optical recording media or writing information into an optical recording media, information transmitting media and spectacle lenses. Among these optical molded articles, it is useful for optical parts of the device for reading information from the optical recording media or writing information into the optical recording media, concretely, for objective lenses, prisms, condenser lenses, diffraction gratings, collimator lenses and sensor lenses. It is particularly suitable for pickup lenses of the next generation DVD.

EXAMPLES

Hereinafter, the present invention will be concretely explained with reference to Examples, however, the present invention is not limited to the Examples. In each Example, respective abbreviations represent the following compounds.

| | |
|---|---|
| MMA : | methyl methacrylate |
| MMBL : | α-methylene-β-methyl butyrolactone (synthesized by a method publicly known in literature) |
| CHMA: | cyclohexyl methacrylate |
| 3FMA : | trifluoroethyl methacrylate (manufactured by Mitsubishi Rayon Co., Ltd.) |
| CHMI : | cyclohexyl maleimide |
| FA513M : | tricyclo[5.2.1.0$^{2,6}$]decan-8-yl methacrylate (manufactured by Hitachi Chemical Co., Ltd.) |
| MA : | methyl acrylate |
| AIBN : | 2,2'-azobisisobutyronitrile |
| P-MC : | 1,1-di-t-butylperoxy-2-methyl cyclohexane (PERHEXA MC manufactured by NOF Corporation) |
| LPO : | lauroyl peroxide |
| n-OM : | n-octyl mercaptan |
| S100A : | glycerin monostearate (RIKEMAL S-100A manufactured by Riken Vitamin Co., Ltd.) |

The evaluating methods for various physical properties in Examples and Comparative Examples are as follows.

(1) Weight average molecular weight

Using the value obtained from gel permeation chromatography (GPC) and differential refractometer, weight average molecular weight (Mw) calculated in terms of an equivalent standard polystyrene molecular weight was obtained.

(2) Glass transition temperature

Glass transition temperature of the pellet-shaped copolymer which was finely cut with nipper was measured with a differential scanning calorimeter, DSC 6200, manufactured by Seiko Instruments Inc.

(3) Light transmittance

Light transmittance of the flat plate (2mm in thickness) molded by injection molding was measured with ultraviolet visible range spectrophotometer, UVmini-1240, manufactured by Shimadzu Corporation. The wavelength of light used in the measurement of light transmittance was 405 nm.

(4) Retardation

Phase difference at the position of 50 mm from the gate and in the center of the width of the dumbbell specimen (total length; 198 mm, width; 19 mm at both ends and 13 mm at the center, thickness; 3 mm) which was injection molded by properly changing the injection pressure, using an injection molder, PS-60E, manufactured by Nissei Plastic Industrial Co., Ltd. under the condition of cylinder temperature of 240°C, mold temperature of 60°C, injection speed of 50%,

injection time of 10 seconds, cooling time of 25 seconds, and molding cycle of 50 seconds, was measured with a polarizing microscope, and retardation was calculated according to the following equation. The wavelength used in the measurement was 546 nm.

$$\text{Retardation (nm)} = \text{phase difference } (°) \times 546 \text{ (nm)} / 180 \text{ } (°)$$

(5) Flexural strength

Flexural strength was measured in conformity with JIS K7171.

(6) Saturated moisture-absorption rate

A flat plate (100 mm in length, 50 mm in width, 2mm in thickness) which was molded by injection molding was dried at 80°C for 48 hours and subjected to moisture absorption by using thermo-hygrostat under the condition of temperature of 60°C, relative humidity of 90%, and exposure time of 720 hours, and saturated moisture-absorption rate was calculated according to the following equation:
S1 : mass of the flat plate after dried at 80°C for 48 hours
S2 : mass of the flat plate after the moisture-absorption test

(Production Example 1) Aqueous solution of anionic polymer compound (A1)

To a polymerization device equipped with a stirrer, a monomer mixture consisting of 58 parts by mass of 2-sulfoethyl sodium methacrylate, 31 parts by mass of an aqueous solution of potassium methacrylate (30% by mass of potassium methacrylate) and 11 parts by mass of methyl methacrylate and 900 parts by mass of deionized water were added, stirred and dissolved. Subsequently, the resultant mixture was heated to 60°C while stirred under nitrogen atmosphere, kept at 60°C for 6 hours while stirred to obtain an aqueous solution of an anionic polymer compound. In this case, after the temperature reached at 50°C in the course of heating, 0.1 parts by mass of ammonium persulfate was added to the reaction system as a polymerization initiator, and further, 11 parts by mass of methyl methacrylate separately weighed was continuously dropped into the.reaction system over a period of 75 minutes.
The aqueous solution of the anionic polymer compound obtained according to the method mentioned above is named as (A1).

(Production Example 2) Aqueous solution of anionic polymer compound (A2)

To a polymerization device equipped with a stirrer, 68 parts by mass of an aqueous solution of potassium hydroxide (17.1 % by mass of potassium hydroxide) and 32 parts by mass of methyl methacrylate were added and the resultant mixture was stirred. After the saponification reaction was finished, the mixture was heated to 80°C and kept at 80°C for 4 hours while stirred to obtain an aqueous solution of an anionic polymer compound. In this case, after the temperature reached at 72°C in the course of heating, 0.1 parts by mass of ammonium persulfate was added to the reaction system as a polymerization initiator. Subsequently, 1,000 parts by mass of deionized water was intermittently added to the polymerization device equipped with a stirrer and, at the same time, the aqueous solution of the anionic polymer compound was transferred to a container equipped with a stirrer and recovered.
The aqueous solution of the anionic polymer compound obtained according to the method mentioned above is named as (A2).

Example 1

To a separable flask having internal volume of 10 liters and equipped with a stirrer, 6,000 milliliters of deionized water was introduced, and 4 g of the aqueous solution of the anionic polymer compound (A1) obtained in Production Example 1 and 1 g of the aqueous solution of the anionic polymer compound (A2) obtained in Production Example 2 as dispersion stabilizers and 9 g of sodium sulfate as a dispersion stabilizing assistant were added, stirred and dissolved. Further, to a monomer mixture consisting of 2,145 g of MMA, 360 g of MMBL, 450 g of 3FMA and 45 g of MA prepared in another container equipped with a stirrer, 6 g of AIBN as a polymerization initiator, 8.1 g of n-OM as a chain transfer agent, and 6 g of S100A as a mold releasing agent were added, stirred and dissolved. The monomer mixture thus

obtained was introduced into the aforementioned separable flask having internal volume of 10 liters and equipped with a stirrer and the system was stirred at the frequency of 300 rpm for 15 minutes while replaced by nitrogen. Subsequently, the system was heated to 80°C to start polymerization, and after the disappearance of the exothermic peak of polymerization, the system was heat treated at 95°C for 60 minutes to complete the polymerization.

The beads-shaped polymer thus obtained was filtrated, washed with water, dried at 80°C for 24 hours and extruded into pellets with a degassing type twin-screw extruder PCM-30 manufactured by IKEGAI Corporation with the cylinder temperature of 220°C. Weight average molecular weight and glass transition temperature were evaluated, using the pellet-shaped copolymer thus obtained. The results of the evaluation are shown in Table 1.

Further, test pieces for various evaluations were injection molded, using the pellet-shaped copolymer, and light transmittance, retardation, flexural strength and saturated moisture-absorption rate were evaluated. The results of the evaluation are shown in Table 1. In the injection molding, the test pieces were prepared by properly changing the injection pressure, using an injection molder, PS-60E, manufactured by Nissei Plastic Industrial Co., Ltd. under the condition of cylinder temperature of 240°C, mold temperature of 60°C, injection speed of 50%, injection time of 10 seconds, cooling time of 25 seconds, and molding cycle of 50 seconds.

[Table 1]

| | | Example | | | Comparative Example | | | | | | |
|---|---|---|---|---|---|---|---|---|---|---|---|
| | | 1 | 2 | 3 | 1 | 2 | 3 | 4 | 5 | 6 | 7 |
| MMA | Mass% | 71.5 | 56.5 | 55.5 | 58 | 60 | 60 | 45 | 25 | 85 | 56.5 |
| MMBL | Mass% | 12 | 12 | 18 | - | - | - | - | - | 13.5 | 12 |
| 3FMA | Mass% | 15 | 10 | 25 | - | - | - | 15 | 15 | - | 30 |
| CHMA | Mass% | - | 20 | - | 24 | - | - | - | - | - | - |
| MA | Mass% | 1.5 | 1.5 | 1.5 | - | - | - | - | - | 1.5 | 1.5 |
| CHMI | Mass% | - | - | - | 18 | - | - | - | - | - | - |
| FA513M | Mass%- | - | - | - | - | 40 | 40 | 40 | 60 | - | - |
| Mass ratio of 3FMA when the mass of MMBL being presumed to be 1 | | 1.25 | 0.83 | 1.39 | - | - | - | - | - | 0 | 2:5 |
| Weight average molecular weight | $\times 10^4$ | 7.7 | 7.6 | 8.7 | 10.4 | 12.0 | 8.9 | 12.0 | 11.3 | 9.5 | 7.5 |
| Glass transition temperature | °C | 120 | 120 | 123 | 126 | 121 | 120 | 117 | 122 | 134 | 116 |
| Light transmittance | % | 91 | 91 | 91 | 86 | 91 | 91 | 91 | 90 | 91 | 91 |
| Retardation | nm | 65 | 70 | 85 | <30 | 130 | 80 | 80 | 120 | 120 | 35 |
| Flexural strength | MPa | 75 | 60 | 65 | 50 | 80 | 45 | 50 | 15 | 110 | 45 |
| Saturated moisture-absorption rate | Mass% | 1.6 | 1.1 | 1.5 | 1.2 | 0.8 | 0.8 | 0.6 | * | 2.3 | 1.1 |
| *) The flat plate could not be manufactured because of the lack of strength of the material. | | | | | | | | | | | |

Example 2

The same procedures of polymerization, pelletizing, manufacturing of test pieces and various evaluations as in Example 1 were carried out except that the composition of the monomer mixture was changed to 1,695 g of MMA, 360 g of MMBL, 300 g of 3FMA, 600 g of CHMA, and 45 g of MA. The results of the evaluations of the molded articles thus obtained are collectively shown in Table 1.

Example 3

The same procedures of polymerization, pelletizing, manufacturing of test pieces and various evaluations as in Example 1 were carried out except that the composition of the monomer mixture was changed to 1,665 g of MMA,

540 g of MMBL, 750 g of 3FMA, and 45 g of MA and n-OM was changed to 6.3 g. The results of the evaluations of the molded articles thus obtained are collectively shown in Table 1.

Comparative Example 1

The same procedures of polymerization, pelletizing, manufacturing of test pieces and various evaluations as in Example 1 were carried out except that the composition of the monomer mixture was changed to 1,740 g of MMA, 720 g of CHMA and 540 g of CHMI, the polymerization initiator was changed to 9 g of P-MC and n-OM was changed to 4.5 g. The results of the evaluations of the molded articles thus obtained are collectively shown in Table 1.

Comparative Example 2

The same procedures of polymerization, pelletizing, manufacturing of test pieces and various evaluations as in Example 1 were carried out except that the composition of the monomer mixture was changed to 1,800 g of MMA and 1,200 g of FA513M, AIBN was changed to 3 g and n-OM was changed to 6 g. The results of the evaluations of the molded articles thus obtained are collectively shown in Table 1.

Comparative Example 3

The same procedures of polymerization, pelletizing, manufacturing of test pieces and various evaluations as in Comparative Example 2 were carried out except that n-OM was changed to 8.1 g. The results of the evaluations of the molded articles thus obtained are collectively shown in Table 1.

Comparative Example 4

The same procedures of polymerization, pelletizing, manufacturing of test pieces and various evaluations as in Comparative Example 2 were carried out except that the composition of the monomer mixture was changed to 1,350 g of MMA, 1,200 g of FA513M and 450 g of 3FMA. The results of the evaluations of the molded articles thus obtained are collectively shown in Table 1.

Comparative Example 5

The same procedures of polymerization, pelletizing, manufacturing of test pieces and various evaluations as in Comparative Example 2 were carried out except that the composition of the monomer mixture was changed to 750 g of MMA, 1,800 g of FA513M and 450 g of 3FMA and the polymerization initiator was changed to 12 g of LPO. The results of the evaluations of the molded articles thus obtained are collectively shown in Table 1.

Comparative Example 6

The same procedures of polymerization, pelletizing, manufacturing of test pieces and various evaluations as in Example 1 were carried out except that the composition of the monomer mixture was changed to 2,250 g of MMA, 405 g of MMBL and 45 g of MA and the chain transfer agent, n-OM, was changed to 6 g. The results of the evaluations of the molded articles thus obtained are collectively shown in Table 1.

Comparative Example 7

The same procedures of polymerization, pelletizing, manufacturing of test pieces and various evaluations as in Example 1 were carried out except that the composition of the monomer mixture was changed to 1,695 g of MMA, 360 g of MMBL, 900 g of 3FMA and 45 g of MA. The results of the evaluations of the molded articles thus obtained are collectively shown in Table 1.

Comparative Example 8

Glass transition temperature of ACRYPET VH 000 manufactured by Mitsubishi Rayon Co., Ltd. was evaluated as 109°C. Further, test pieces for various evaluations were injection molded, using ACRYPET VH 000, and light transmittance, retardation, saturated moisture-absorption rate and flexural strength were evaluated. Light transmittance of 92%, retardation of 85 nm, saturated moisture-absorption rate of 1.6% by mass, and flexural strength of 125 MPa were obtained.

INDUSTRIAL APPLICABILITY

The optical copolymer of the present invention is suitable for optical parts of the device for reading information from the optical recording media and writing information into the optical recording media and particularly suitable for the pickup lens of a blue laser.

## Claims

1. An optical copolymer comprising:

   50 to 80% by mass of methyl methacrylate units;
   10 to 20% by mass of units derived from a lactone compound represented by the following general formula (1); and
   10 to 30% by mass of trifluoroethyl methacrylate units,
   wherein the mass ratio of the trifluoroethyl methacrylate units is in the range of 0.5 to 2.0 when the mass of the units derived from the lactone compound represented by the general formula (1) is presumed to be 1, and the glass transition temperature of the optical copolymer is 120°C or above.

   General formula (1)

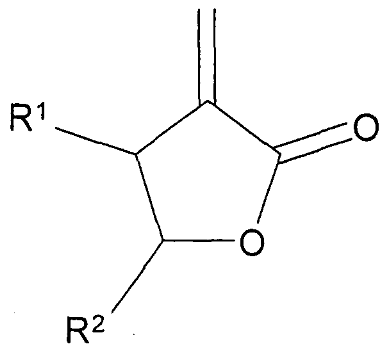

   (In the above formula, $R^1$ and $R^2$ independently represent hydrogen atom, methyl group or ethyl group, and the total number of the carbon atoms in each of $R^1$ and $R^2$ is any one of 1 to 3.)

2. An optical copolymer comprising:

   50 to 75% by mass of methyl methacrylate units;
   10 to 20% by mass of units derived from a lactone compound represented by the following general formula (1);
   10 to 30% by mass of trifluoroethyl methacrylate units; and
   5 to 25% by mass of (meth)acrylic ester units having alicyclic hydrocarbon group with 6 to 22 carbon atoms in its ester portion,
   wherein the mass ratio of the trifluoroethyl methacrylate units is in the range of 0.5 to 2.0 when the mass of the units derived from the lactone compound represented by the general formula (1) is presumed to be 1, and the glass transition temperature of the optical copolymer is 120°C or above.

General formula (1)

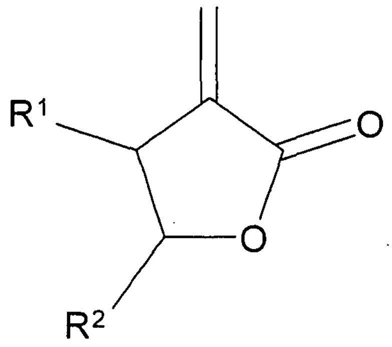

(In the above formula, $R^1$ and $R^2$ independently represent hydrogen atom, methyl group or ethyl group, and the total number of the carbon atoms in each of $R^1$ and $R^2$ is any one of 1 to 3.)

**3.** The optical copolymer according to claim 1 or 2, wherein saturated moisture- absorption rate at 60°C under the atmosphere of relative humidity of 90% is 1.6% by mass or less.

**4.** An optical molded article using the optical copolymer of claim 3.

**5.** The optical molded article according to claim 4, wherein flexural strength according to JIS K7171 is 50 MPa or more.

**6.** The optical molded article according to claim 4, wherein retardation is 100 nm or less.

**INTERNATIONAL SEARCH REPORT**

International application No.
PCT/JP2005/015722

A. CLASSIFICATION OF SUBJECT MATTER
***C08F220/14*** (2006.01), ***C08F220/16*** (2006.01), ***C08F224/00*** (2006.01), ***G02B1/04*** (2006.01), ***G02B5/18*** (2006.01)

According to International Patent Classification (IPC) or to both national classification and IPC

B. FIELDS SEARCHED

Minimum documentation searched (classification system followed by classification symbols)
***C08F220/14*** (2006.01), ***C08F220/16*** (2006.01), ***C08F224/00*** (2006.01), ***G02B1/04*** (2006.01), ***G02B5/18*** (2006.01)

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)
WPI/L, CA(STN)

C. DOCUMENTS CONSIDERED TO BE RELEVANT

| Category* | Citation of document, with indication, where appropriate, of the relevant passages | Relevant to claim No. |
|---|---|---|
| A | WO 2003/048220 A2 (DU PONT DE NEMOURS & CO E I),<br>12 June, 2003 (12.06.03),<br>Full text<br>& US 2003/0171522 A1 & EP 1448635 A2<br>& JP 2005-511805 A & BR 2002/014442 A | 1-6 |
| A | WO 2001/064793 A2 (DU PONT DE NEMOURS & CO E I),<br>07 September, 2001 (07.09.01),<br>Full text<br>& US 2002/010312 A1 & EP 1257588 A2<br>& EP 1544221 A2 & KR 2002/081354 A<br>& BR 2001/008672 A & CN 1427852 A<br>& TW 593586 A | 1-6 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 13 October, 2005 (13.10.05) | 25 October, 2005 (25.10.05) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.
PCT/JP2005/015722

C (Continuation). DOCUMENTS CONSIDERED TO BE RELEVANT

| Category* | Citation of document, with indication, where appropriate, of the relevant passages | Relevant to claim No. |
|---|---|---|
| A | JP 09-033736 A (Mitsubishi Rayon Co., Ltd.), 07 February, 1997 (07.02.97), Full text (Family: none) | 1-6 |
| A | JP 09-012646 A (Mitsubishi Rayon Co., Ltd.), 14 January, 1997 (14.01.97), Full text (Family: none) | 1-6 |
| A | JP 09-012644 A (Mitsubishi Rayon Co., Ltd.), 14 January, 1997 (14.01.97), Full text (Family: none) | 1-6 |
| A | JP 04-268564 A (Fuji Photo Film Co., Ltd.), 24 September, 1992 (24.09.92), Full text & EP 0535236 A1 & US 5342716 A | 1-6 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 8231648 A
- JP 2004204018 A